# EUROPEAN PATENT APPLICATION

(11) **EP 3 731 190 A1**
(43) Date of publication of application: **28.10.2020**
(21) Application number: 19897571.6
(22) Date of filing: 07.11.2019
(51) Int. Cl.: G06T 17/05

(54) **HUMAN-MACHINE INTERACTION METHOD AND APPARATUS BASED ON HIGH-PRECISION MAP**

(30) Priority: 19.02.2019 CN 201910122624
(71) Applicant: BEIJING BAIDU NETCOM SCIENCE TECHNOLOGY CO., LTD., No.10 Shangdi 10th Street Haidian District Beijing 100085 (CN)
(72) Inventor: WANG, Yue, Haidan District Beijing 100085 (CN); WU, Zelin, Haidan District Beijing 100085 (CN); XUE, Jingjing, Haidan District Beijing 100085 (CN); LIU, Yingnan, Haidan District Beijing 100085 (CN); RAO, Wenlong, Haidan District Beijing 100085 (CN); GONG, Wei, Haidan District Beijing 100085 (CN)
(74) Representative: Gill Jennings & Every LLP
(86) International application number: PCT/CN2019/116372
(87) International publication number: WO 2020/168747

(57) **Abstract**

Embodiments of the present disclosure provides a high-precision map-based human-machine interaction method and apparatus. A specific embodiment of the method includes: acquiring a pre-generated high-precision map; analyzing, in response to receiving an information addition request, the information addition request; and adding additional information indicated by the information addition request to the pre-generated high-precision map to generate an updated high-precision map. According to this embodiment, it may be convenient for a user to add a map element to the high-precision map, which facilitates the further improvement of the high-precision map and the simulation of a traffic scenario.

## Description

This patent application claims the priority to Chinese Patent Application No. 201910122624.3, filed on February 19, 2019 by Beijing Baidu Netcom Science and Technology Co., Ltd., entitled "High-precision Map-based Human-machine Interaction Method and Apparatus," the entire disclosure of which is hereby incorporated by reference.

### TECHNICAL FIELD

Embodiments of the present disclosure relate to the field of computer technology, specifically to the field of electronic map technology, and particular to a high-precision map-based human-machine interaction method and apparatus.

### BACKGROUND

A high-precision map refers to a high-precision electronic map with a centimeter-level absolute coordinate precision. The absolute coordinate precision here refers to the deviation between the coordinates of a certain target on the map and the true coordinates of a thing in the external world that corresponds to the target, and is usually expressed in the unit of length. Compared with an ordinary navigation electronic map, the high-precision map contains more abundant information. For example, the high-precision map may include various road markings, traffic signs, etc.

The high-precision map may be used in the field of autonomous driving, and may provide a large amount of driving assistance information (e.g., the geometric structure of a road surface, the relative position of a road marking line and the model of a surrounding road environment) to an autonomous driving vehicle.

The absolute coordinate precision of the ordinary navigation electronic map is about 10 meters. Such a precision may be used to assist a driver in navigation. However, in the field of autonomous driving, an autonomous driving vehicle needs to know precisely the position of the vehicle itself on the road. Generally, the distance between the vehicle and the obstacle on the side of the road and the distance between the vehicle and the adjacent lane are about tens of centimeters, or even about a few centimeters. When the ordinary navigation electronic map is used, the distance between the autonomous driving vehicle and the obstacle and the relationship between the autonomous driving vehicle and the adjacent lane cannot be accurately determined due to the precision limitation of the ordinary navigation electronic map. Therefore, the ordinary navigation electronic map is far from meeting the needs of the autonomous driving vehicle.

The existing high-precision map is usually based on environmental data around a map collection vehicle that is collected by the map collection vehicle driven by a technician. For example, the map collection vehicle may be provided with collection devices such as a laser radar, an industrial camera, a global positioning receiver and an inertial measurement unit to collect the surrounding environment data of the area through which the map collection vehicle passes, and fuse the collected various data to generate a colored electronic map.

### SUMMARY

Embodiments of the present disclosure provide a high-precision map-based human-machine interaction method and apparatus.

In a first aspect, an embodiment of the present disclosure provide a high-precision map-based human-machine interaction method, including: acquiring a pre-generated high-precision map; analyzing, in response to receiving an information addition request, the information addition request; and adding additional information indicated by the information addition request to the pre-generated high-precision map to generate an updated high-precision map.

In some embodiments, the method further includes, presenting, in response to receiving a path addition request, a planned path indicated by the path addition request in the updated high-precision map.

In some embodiments, the analyzing, in response to receiving an information addition request, the information addition request includes: extracting semantic information of the information addition request; and determining a map element indicated by the information addition request based on the semantic information.

In some embodiments, the adding additional information indicated by the information addition request to the pre-generated high-precision map to generate an updated high-precision map includes: generating a three-dimensional model of the map element in the pre-generated high-precision map according to position information indicated by the information addition request.

In some embodiments, the method further includes: determining, in response to receiving a position query request, a map element corresponding to the position query request; and showing the map element in the high-precision map.

In a second aspect, an embodiment of the present disclosure provides a high-precision map-based human-machine interaction apparatus, including: an acquiring unit, configured to acquire a pre-generated high-precision map; an analyzing unit, configured to analyze, in response to receiving an information addition request, the information addition request; and a generating unit, configured to add additional information indicated by the information addition request to the pre-generated high-precision map to generate an updated high-precision map.

In some embodiments, the apparatus further includes a showing unit, where the showing unit is configured to: present, in response to receiving a path addition request, a planned path indicated by the path addition request in the updated high-precision map.

In some embodiments, the analyzing unit is further configured to: extract semantic information of the information addition request; and determine a map element indicated by the information addition request based on the semantic information.

In some embodiments, the generating unit is further configured to: generate a three-dimensional model of the map element in the pre-generated high-precision map according to position information indicated by the information addition request.

In some embodiments, the showing unit is further configured to: determine, in response to receiving a position query request, a map element corresponding to the position query request; and show the map element in the high-precision map.

In a third aspect, an embodiment of the present disclosure provides an electronic device, including: one or more processors; and a storage device, configured to store one or more programs, the one or more programs, when executed by the one or more processors, cause the one or more processors to implement the method according to any implementation in the first aspect.

In a fourth aspect, an embodiment of the present disclosure provides a computer readable medium, storing a computer program, the program, when executed by a processor, implements the method according to any implementation in the first aspect.

According to the high-precision map-based human-machine interaction method and apparatus provided in the embodiments of the present disclosure, the pre-generated high-precision map is acquired, the information addition request is then analyzed in response to receiving the information addition request, and finally, the additional information indicated by the information addition request is added to the pre-generated high-precision map to generate the updated high-precision map. According to the above interactive mode, it may be convenient for a user to add a map element to the high-precision map, which facilitates the further improvement of the high-precision map and the simulation of a traffic scenario.

### BRIEF DESCRIPTION OF THE DRAWINGS

After reading detailed descriptions for non-limiting embodiments given with reference to the following accompanying drawings, other features, objectives and advantages of the present disclosure will be more apparent.
Fig. 1 is a diagram of an exemplary system architecture in which a high-precision map-based human-machine interaction method according to an embodiment of the present disclosure may be applied;
Fig. 2 is a flowchart of a high-precision map-based human-machine interaction method according to an embodiment of the present disclosure;
Fig. 3 is a schematic diagram of an application scenario of the high-precision map-based human-machine interaction method according to an embodiment of the present disclosure;
Fig. 4 is a flowchart of the high-precision map-based human-machine interaction method according to another embodiment of the present disclosure;
Fig. 5 is a schematic structural diagram of a high-precision map-based human-machine interaction apparatus according to an embodiment of the present disclosure; and
Fig. 6 is a schematic structural diagram of a computer system adapted to implement an electronic device according to embodiments of the present disclosure.

### DETAILED DESCRIPTION OF EMBODIMENTS

The present disclosure is further described below in detail by combining accompanying drawings and embodiments. It may be appreciated that the specific embodiments described herein are merely used for explaining the relevant disclosure, rather than limiting the disclosure. In addition, it should be noted that, for ease of description, only parts related to the relevant disclosure are shown in the accompanying drawings.

It should also be noted that the embodiments in the present disclosure and the features in the embodiments may be combined with each other on a non-conflict basis. The present disclosure will be described below in detail with reference to the accompanying drawings and in combination with the embodiments.

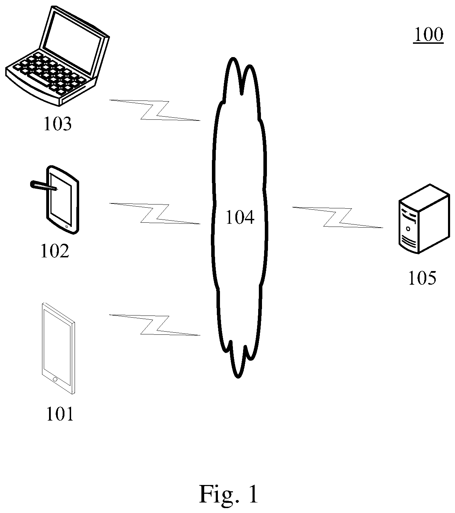

Fig. 1 illustrates an exemplary system architecture 100 in which a high-precision map-based human-machine interaction method according to an embodiment of the present disclosure may be applied.

As shown in Fig. 1, the system architecture 100 may include terminal devices 101, 102 and 103, a network 104 and a server 105. The network 104 serves as a medium providing a communication link between the terminal devices 101, 102 and 103 and the server 105. The network 104 may include various types of connections, for example, wired or wireless communication links, or optical fiber cables.

A user may interact with the server 105 via the network 104 by using the terminal devices 101, 102 and 103, to receive or send a message, etc. Various client applications (e.g., a web browser application, a search application, an instant communication tool and a map collecting and showing application) may be installed on the terminal devices 101, 102 and 103.

The terminal devices 101, 102 and 103 may be hardware or software. When the terminal devices 101, 102 and 103 are the hardware, the terminal devices 101, 102 and 103 may be various electronic devices having a display screen and supporting webpage browsing, the electronic devices including, but not limited to, a camera, a smart phone, a tablet computer, an e-book reader, a laptop portable computer, a desktop computer, etc. When the terminal devices 101, 102 and 103 are software, the terminal devices 101, 102 and 103 may be installed in the above listed electronic devices. The terminal devices may be implemented as a plurality of pieces of software or a plurality of software modules (e.g., software or software modules for providing a distributed service), or may be implemented as a single piece of software or a single software module, which will not be specifically defined here.

The server 105 may be a server providing various services, for example, receiving information sent by the terminal devices 101, 102 and 103, processing the information, and adding the information processing result on a preset high-precision map. The server 105 may feedback the high-precision map added with the information processing result to the terminal devices 101, 102 and 103.

It should be noted that the server 105 may be hardware or software. When the server 105 is the hardware, the server 105 may be implemented as a distributed server cluster composed of a plurality of servers, or may be implemented as a single server. When the server 105 is the software, the server 105 may be implemented as a plurality of pieces of software or a plurality of software modules (e.g., software or software modules for providing a distributed service), or may be implemented as a single piece of software or a single software module, which will not be specifically defined here.

It should be noted that the high-precision map-based human-machine interaction method provided by the embodiments of the present disclosure is generally performed by the server 105. Correspondingly, a high-precision map-based human-machine interaction apparatus is generally provided in the server 105.

It should be appreciated that the numbers of the terminal devices, the networks, and the servers in Fig. 1 are merely illustrative. Any number of terminal devices, networks and servers may be provided based on actual requirements.

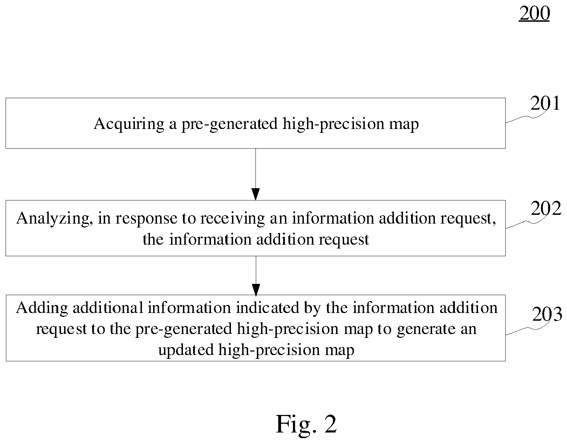

Further referring to Fig. 2, Fig. 2 illustrates a flow 200 of a high-precision map-based human-machine interaction method according to an embodiment of the present disclosure. The high-precision map-based human-machine interaction method includes the following steps.

Step 201, acquiring a pre-generated high-precision map.

In this embodiment, an executing body (e.g., the server 105 shown in Fig. 1) of the high-precision map-based human-machine interaction method may acquire the pre-generated high-precision map in various ways. The high-precision map may be used for autonomous driving vehicles, automotive driving simulation, and the like.

The above high-precision map may include a plurality of pre-generated original map elements. The map elements may include a lane line, a turn, a traffic light, an obstacle, various road signs on a lane, a symbol, a billboard on the roadside, a bridge, etc. The above high-precision map may be generated according to data pre-collected by a sensor such as a camera and a laser radar.

The above pre-generated high-precision map may be stored in the above executing body, or may be stored in an electronic device communicated with the above executing body.

Step 202, analyzing, in response to receiving an information addition request, the information addition request.

In this embodiment, after acquiring the pre-generated high-precision map in step 201, the above executing body may show the above high-precision map. For example, the above high-precision map is shown on a display screen to which the above executing body is connected. Alternatively, the above executing body may send the above pre-generated high-precision map to a terminal device (e.g., the terminal devices 101, 102 and 103 shown in Fig. 1), to cause the terminal device to show the above high-precision map on its display screen.

In a page showing a high-precision map, a high-precision map editing control may be set. A user may click on the editing control to input to-be-added information. The user may send the information addition request to the executing body through the interface of the shown high-precision map. Next, in the page, the user may select an area for the to-be-added information in the high-precision map through a selection operation such as a click. Alternatively, the user may specify an area for the to-be-added information in the additional information.

When the above high-precision map is displayed by the display screen of the executing body, the above executing body may directly receive the information addition request inputted by the user. When the high-precision map is displayed by the display screen of the electronic device connected to the above executing body, the above executing body may receive the above information addition request from the above electronic device by means of a wired connection or a wireless connection.

The information addition request may be inputted by the user through a text, or may be inputted by the user through voice. In addition, the information addition request may also be added by the user through a selection operation of a selection item showing a map element provided in the interactive page of the high-precision map. For example, the above selection item of the map element may include a lane line, a gradient option, a turn option, etc.

The above executing body may analyze the information addition request according to various methods.

In some application scenarios, the above information addition request refers to an information addition request in a form of text. The analyzing, in response to receiving an information addition request, the information addition request may include: extracting semantic information of the information addition request; and determining a map element indicated by the information addition request based on the semantic information. The above executing body may perform a semantic analysis on the above information addition request through a semantic analysis method. For example, word segmentation is performed on the information addition request, part-of-speech annotation is performed on the word segmentation result, a keyword is extracted from the word segmentation result, and the semantic information of the information addition request is determined according to the keyword. Alternatively, the semantic information of the information addition request is determined according to a preset semantic analysis model. The above semantic analysis model may be various supervised machine learning models, or various unsupervised machine learning models. Further, the additional information indicated by the information addition request is determined based on the semantic information.

In some application scenarios, the above information addition request may be an information addition request in a form of voice. The extracting semantic information of the information addition request may include: converting voice information into text information, and then performing a semantic analysis on the text information to obtain the additional information.

For example, the above additional information may include various map elements, a station site identifier, parking space information, user annotation information, etc. for example, the above user annotation information may be prompt information for prompting a driving failure rate.

Step 203, adding additional information indicated by the information addition request to the pre-generated high-precision map to generate an updated high-precision map.

In this embodiment, the executing body of the high-precision map-based human-machine interaction method may add the additional information indicated by the information addition request to the pre-generated high-precision map to generate the updated high-precision map.

In some alternative implementations of this embodiment, the above additional information may refer to a map element, for example, a station site, a lane line, a gradient and an obstacle. In these alternative implementations, the adding additional information indicated by the information addition request to the pre-generated high-precision map to generate an updated high-precision map includes: generating a three-dimensional model of the map element in the pre-generated high-precision map according to position information indicated by the information addition request. For example, the three-dimensional model of the station, the three-dimensional model of the gradient and the three-dimensional model of the obstacle are added at a position indicated by the information addition request. The above position information indicated by the information addition request may be, for example, position information determined, in a page displaying the high-precision map, by the user through a selection operation such as a click; or position information specified in the information addition request of the user.

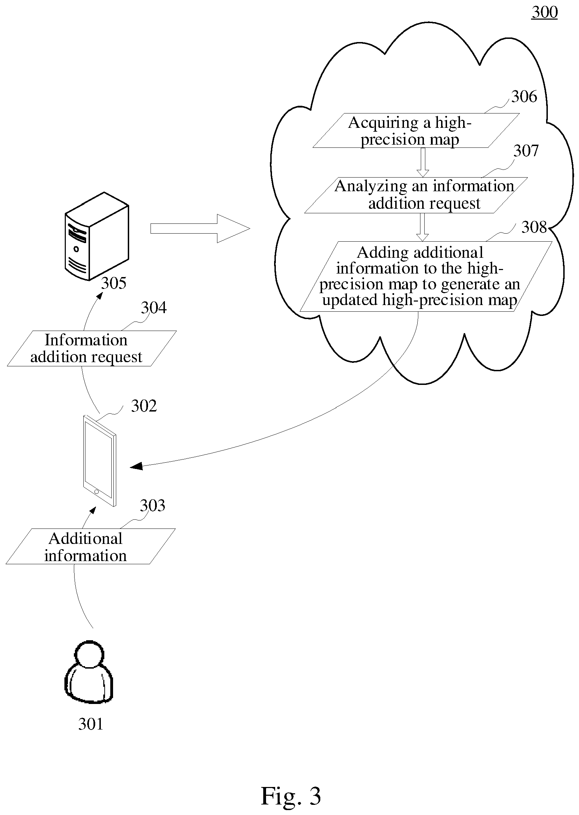

Further referring to Fig. 3, Fig. 3 is a schematic diagram 300 of an application scenario of the high-precision map-based human-machine interaction method according to this embodiment. In the application scenario of Fig. 3, the display screen of a terminal device 302 may display a high-precision map. The user may input additional information in the page displaying the high-precision map. The terminal device 302 may generate a new addition request 304 according to the additional information inputted by the user, and send the information addition request to a server 305 by means of a wired communication or a wireless communication. The server 305 may acquire a pre-generated high-precision map (306). Then, the high-precision map analyzes, in response to receiving the information addition request, the information addition request (307). Next, the server 305 may add the additional information indicated by the information addition request to the pre-generated high-precision map to generate an updated high-precision map (308). The server 305 may send the updated high-precision map to the terminal device 302.

According to the method provided in the above embodiment of the present disclosure, the pre-generated high-precision map is acquired, the information addition request is analyzed in response to receiving the information addition request, and the additional information indicated by the information addition request is added to the pre-generated high-precision map to generate the updated high-precision map. According to the above interactive mode, it may be convenient for the user to add a map element to the high-precision map, which facilitates the further improvement of the high-precision map and the simulation of a traffic scenario.

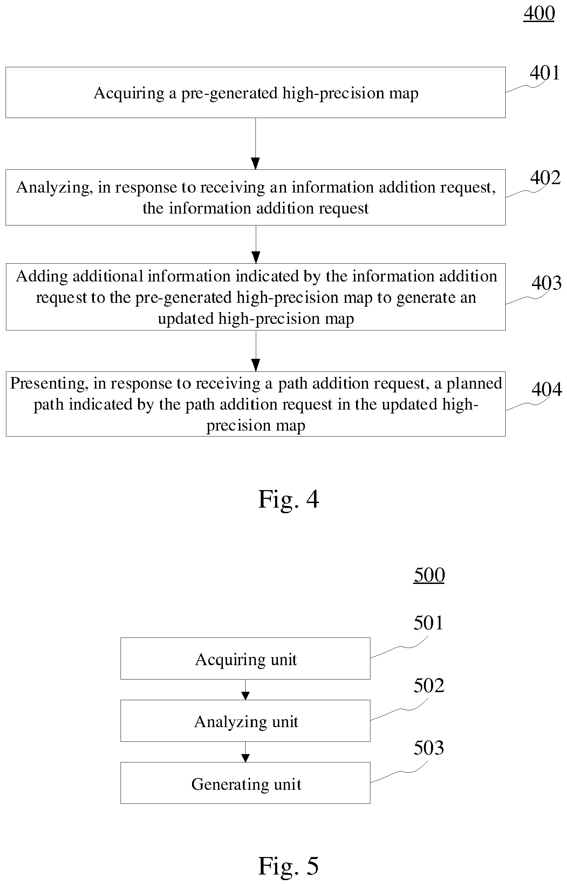

Further referring to Fig. 4, Fig. 4 illustrates a flow 400 of another embodiment of the high-precision map-based human-machine interaction method. The flow 400 of the high-precision map-based human-machine interaction method includes the following steps.

Step 401, acquiring a pre-generated high-precision map.

In this embodiment, step 401 may be identical or similar to step 201 of the embodiment shown in Fig. 2, which will not be repeatedly described here.

Step 402, analyzing, in response to receiving an information addition request, the information addition request.

In this embodiment, step 402 may be identical or similar to step 202 of the embodiment shown in Fig. 2, which will not be repeatedly described here.

Step 403, adding additional information indicated by the information addition request to the pre-generated high-precision map to generate an updated high-precision map.

In this embodiment, step 403 may be identical or similar to step 203 of the embodiment shown in Fig. 2, which will not be repeatedly described here.

Step 404, presenting, in response to receiving a path addition request, a planned path indicated by the path addition request in the updated high-precision map.

In this embodiment, an executing body of the high-precision map-based human-machine interaction method (e.g. the server shown in Fig. 1) presents, in response to receiving the path addition request, the planned path indicated by the path addition request in the updated high-precision map.

After generating the updated high-precision map in step 403, the above executing body may show the above updated high-precision map in a display screen connected to the executing body. The above executing body may also send the updated high-precision map to an electronic device (e.g., the terminal devices shown in Fig. 1) connected to the executing body, and the above updated high-precision map is shown by the display screen of the above electronic device.

A user may input the path addition request in the page displaying the above updated high-precision map. The above path addition request may include the planned path. For example, the planned path may include a starting site, an intermediate site and a terminal site of the path. For example, the user may select, in the page displaying the high-precision map, a place through a selection operation such as a click, and set the place as the starting site. Then, a three-dimensional site model and a starting site identifier are generated in the high-precision map. Next, an other place is selected in the high-precision map through a selection operation such as a click, and the place is set as the intermediate site, or the terminal site.

It may be seen from Fig. 4, as compared with the embodiment corresponding to Fig. 2, the flow 400 of the high-precision map-based human-machine interaction method in this embodiment emphasizes that the planned path indicated by the path addition request is presented in the updated high-precision map in response to receiving the path addition request, thereby realizing the setting for the path setting of an autonomous driving vehicle according to the high-precision map and the planning for the path of the autonomous driving vehicle.

In some alternative implementations of various embodiments of the high-precision map-based human-machine interaction method of the present disclosure, the high-precision map-based human-machine interaction method of the embodiments shown in Fig. 2 and Fig. 4 may further include: determining, in response to receiving a position query request, a map element corresponding to the position query request; and showing the map element in the high-precision map.

In these alternative implementations, the position query request inputted by the user may be received in the above interface showing the high-precision map. For example, the position query request of the user may include a specific station site name. The above executing body may analyze the query request to determine the map element corresponding to the query request. The map element indicated by the query request (e.g., the station name and the parking space information) is matched in the high-precision map, and the above map element is shown in the high-precision map according to the matching result.

Further referring to Fig. 5, as an implementation of the method shown in the above figures, an embodiment of the present disclosure provides a high-precision map-based human-machine interaction apparatus. The embodiment of the apparatus corresponds to the embodiment of the method shown in Fig. 2, and the apparatus may be applied in various electronic devices.

As shown in Fig. 5, the high-precision map-based human-machine interaction apparatus 500 in this embodiment includes an acquiring unit 501, an analyzing unit 502 and a generating unit 503. Here, the acquiring unit 501 is configured to acquire a pre-generated high-precision map. The analyzing unit 502 is configured to analyze, in response to receiving an information addition request, the information addition request. The generating unit 503 is configured to add additional information indicated by the information addition request to the pre-generated high-precision map to generate an updated high-precision map.

In this embodiment, for specific processes of the acquiring unit 501, the analyzing unit 502 and the generating unit 503 in the high-precision map-based human-machine interaction apparatus 500 and their technical effects, reference may be made to relative descriptions of step 201, step 202 and step 203 in the corresponding embodiment of Fig. 2 respectively, which will not be repeatedly described here.

In some alternative implementations of this embodiment, the high-precision map-based human-machine interaction apparatus 500 further includes a showing unit 504. The showing unit 504 is configured to present, in response to receiving a path addition request, a planned path indicated by the path addition request in the updated high-precision map.

In some alternative implementations of this embodiment, the analyzing unit 502 is further configured to: extract semantic information of the information addition request; and determine a map element indicated by the information addition request based on the semantic information.

In some alternative implementations of this embodiment, the generating unit 503 is further configured to: generate a three-dimensional model of the map element in the pre-generated high-precision map according to position information indicated by the information addition request.

In some alternative implementations of this embodiment, the showing unit 504 is further configured to: determine, in response to receiving a position query request, a map element corresponding to the position query request; and show the map element in the high-precision map.

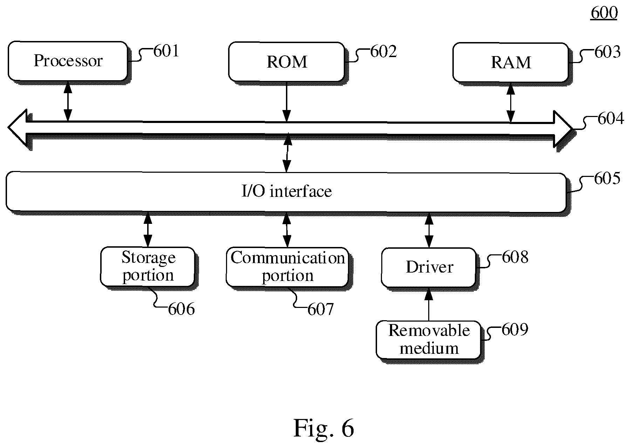

Referring to Fig. 6, a schematic structural diagram of a computer system 600 of an electronic device adapted to implement embodiments of the present disclosure is shown. The computer system shown in Fig. 6 is merely an example, and should not limit the function and scope of use of the embodiments of the present disclosure.

As shown in Fig. 6, the computer system 600 includes a processor 601, which may execute various appropriate actions and processes in accordance with a program stored in a read-only memory (ROM) 602 or a program loaded into a random access memory (RAM) 603 from a storage portion 608. The RAM 603 also stores various programs and data required by operations of the system 600. The processor 601, the ROM 602 and the RAM 603 are connected to each other through a bus 604. An input/output (I/O) interface 605 is also connected to the bus 604.

The following components are connected to the I/O interface 605: a storage portion 606 including a hard disk and the like; and a communication portion 607 including a network interface card, such as a LAN card and a modem. The communication portion 607 performs communication processes via a network, such as the Internet. A driver 608 is also connected to the I/O interface 705 as required. A removable medium 609, such as a magnetic disk, an optical disk, a magneto-optical disk, and a semiconductor memory, may be installed on the driver 608, so that a computer program read therefrom is installed on the storage portion 606 as needed.

In particular, according to embodiments of the present disclosure, the process described above with reference to the flow chart may be implemented in a computer software program. For example, an embodiment of the present disclosure includes a computer program product, which comprises a computer program that is tangibly embedded in a machine-readable medium. The computer program includes program codes for executing the method as illustrated in the flow chart. In such an embodiment, the computer program may be downloaded and installed from a network via the communication portion 607, and/or may be installed from the removable media 609. The computer program, when executed by the processor 601, implements the functions as defined by the methods of the present disclosure. It should be noted that the computer readable medium in the present disclosure may be computer readable signal medium or computer readable storage medium or any combination of the above two. An example of the computer readable storage medium may include, but not limited to: electric, magnetic, optical, electromagnetic, infrared, or semiconductor systems, apparatus, elements, or a combination of any of the above. A more specific example of the computer readable storage medium may include but is not limited to: electrical connection with one or more wire, a portable computer disk, a hard disk, a random access memory (RAM), a read only memory (ROM), an erasable programmable read only memory (EPROM or flash memory), a fibre, a portable compact disk read only memory (CD-ROM), an optical memory, a magnet memory or any suitable combination of the above. In the present disclosure, the computer readable storage medium may be any tangible medium containing or storing programs which may be used by a command execution system, apparatus or element or incorporated thereto. In the present disclosure, the computer readable signal medium may include data signal in the base band or propagating as parts of a carrier, in which computer readable program codes are carried. The propagating data signal may take various forms, including but not limited to: an electromagnetic signal, an optical signal or any suitable combination of the above. The signal medium that can be read by computer may be any computer readable medium except for the computer readable storage medium. The computer readable medium is capable of transmitting, propagating or transferring programs for use by, or used in combination with, a command execution system, apparatus or element. The program codes contained on the computer readable medium may be transmitted with any suitable medium including but not limited to: wireless, wired, optical cable, RF medium etc., or any suitable combination of the above.

A computer program code for executing operations in the present disclosure may be compiled using one or more programming languages or combinations thereof. The programming languages include object-oriented programming languages, such as Java, Smalltalk or C++, and also include conventional procedural programming languages, such as "C" language or similar programming languages. The program code may be completely executed on a user's computer, partially executed on a user's computer, executed as a separate software package, partially executed on a user's computer and partially executed on a remote computer, or completely executed on a remote computer or server. In the circumstance involving a remote computer, the remote computer may be connected to a user's computer through any network, including local area network (LAN) or wide area network (WAN), or may be connected to an external computer (for example, connected through Internet using an Internet service provider).

The flow charts and block diagrams in the accompanying drawings illustrate architectures, functions and operations that may be implemented according to the systems, methods and computer program products of the various embodiments of the present disclosure. In this regard, each of the blocks in the flow charts or block diagrams may represent a module, a program segment, or a code portion, said module, program segment, or code portion comprising one or more executable instructions for implementing specified logic functions. It should also be noted that, in some alternative implementations, the functions denoted by the blocks may occur in a sequence different from the sequences shown in the figures. For example, any two blocks presented in succession may be executed, substantially in parallel, or they may sometimes be in a reverse sequence, depending on the function involved. It should also be noted that each block in the block diagrams and/or flow charts as well as a combination of blocks may be implemented using a dedicated hardware-based system executing specified functions or operations, or by a combination of a dedicated hardware and computer instructions.

The units involved in the embodiments of the present disclosure may be implemented by means of software or hardware. The described units may also be provided in a processor. For example, the processor may be described as: a processor including an acquiring unit, an analyzing unit and a generating unit. The names of these units do not in some cases constitute a limitation to such units themselves. For example, the acquiring unit may alternatively be described as "a unit for acquiring a pre-generated high-precision map."

In another aspect, the present disclosure further provides a computer readable medium. The computer readable medium may be the computer readable medium included in the apparatus described in the above embodiments, or a stand-alone computer readable medium not assembled into the apparatus. The computer readable medium carries one or more programs. The one or more programs, when executed by the apparatus, cause the apparatus to: acquire a pre-generated high-precision map; analyze, in response to receiving an information addition request, the information addition request; and add additional information indicated by the information addition request to the pre-generated high-precision map to generate an updated high-precision map.

The above description only provides an explanation of the preferred embodiments of the present disclosure and the technical principles used. It should be appreciated by those skilled in the art that the inventive scope of the present disclosure is not limited to the technical solutions formed by the particular combinations of the above-described technical features. The inventive scope should also cover other technical solutions formed by any combinations of the above-described technical features or equivalent features thereof without departing from the concept of the disclosure. Technical schemes formed by the above-described features being interchanged with, but not limited to, technical features with similar functions disclosed in the present disclosure are examples.

## Claims

1. A high-precision map-based human-machine interaction method, comprising:
acquiring a pre-generated high-precision map;
analyzing, in response to receiving an information addition request, the information addition request; and
adding additional information indicated by the information addition request to the pre-generated high-precision map to generate an updated high-precision map.

2. The method according to claim 1, further comprising:
presenting, in response to receiving a path addition request, a planned path indicated by the path addition request in the updated high-precision map.

3. The method according to claim 1, wherein the analyzing, in response to receiving an information addition request, the information addition request comprises:
extracting semantic information of the information addition request; and
determining a map element indicated by the information addition request based on the semantic information.

4. The method according to claim 3, wherein the adding additional information indicated by the information addition request to the pre-generated high-precision map to generate an updated high-precision map comprises:
generating a three-dimensional model of the map element in the pre-generated high-precision map according to position information indicated by the information addition request.

5. The method according to claim 2, further comprising:
determining, in response to receiving a position query request, a map element corresponding to the position query request; and
showing the map element in the high-precision map.

6. A high-precision map-based human-machine interaction apparatus, comprising:
an acquiring unit, configured to acquire a pre-generated high-precision map;
an analyzing unit, configured to analyze, in response to receiving an information addition request, the information addition request; and
a generating unit, configured to add additional information indicated by the information addition request to the pre-generated high-precision map to generate an updated high-precision map.

7. The apparatus according to claim 6, further comprising a showing unit, wherein the showing unit is configured to:
present, in response to receiving a path addition request, a planned path indicated by the path addition request in the updated high-precision map.

8. The apparatus according to claim 6, wherein the analyzing unit is further configured to:
extract semantic information of the information addition request; and
determine a map element indicated by the information addition request based on the semantic information.

9. The apparatus according to claim 8, wherein the generating unit is further configured to:
generate a three-dimensional model of the map element in the pre-generated high-precision map according to position information indicated by the information addition request.

10. The apparatus according to claim 7, wherein the showing unit is further configured to:
determine, in response to receiving a position query request, a map element corresponding to the position query request; and
show the map element in the high-precision map.

11. An electronic device, comprising:
one or more processors; and
a storage apparatus, configured to store one or more programs,
wherein the one or more programs, when executed by the one or more processors, cause the one or more processors to implement the method according to any one of claims 1-5.

12. A computer readable medium, storing a computer program, wherein the program, when executed by a processor, implements the method according to any one of claims 1-5.
